(19) **Europäisches Patentamt**
**European Patent Office**
**Office européen des brevets**

(11) **EP 3 331 950 B1**

(12) **EUROPEAN PATENT SPECIFICATION**

(45) Date of publication and mention
of the grant of the patent:
**02.10.2019 Bulletin 2019/40**

(51) Int Cl.:
**C08L 23/04** *(2006.01)*

(21) Application number: **16750140.2**

(86) International application number:
**PCT/EP2016/068382**

(22) Date of filing: **02.08.2016**

(87) International publication number:
**WO 2017/021389 (09.02.2017 Gazette 2017/06)**

(54) **COMPATIBLE HETEROGENEOUS POLYMER BLENDS**

KOMPATIBLE HETEROGENE POLYMERMISCHUNGEN

MÉLANGES DE POLYMÈRES HÉTÉROGÈNES COMPATIBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2015 EP 15179805**

(43) Date of publication of application:
**13.06.2018 Bulletin 2018/24**

(73) Proprietor: **Borealis AG**
**1220 Vienna (AT)**

(72) Inventors:
• **MANTERE, Lotta**
**00510 Helsinki (FI)**

• **NUMMILA-PAKARINEN, Auli**
**06100 Porvoo (FI)**
• **OLLIKAINEN, Andrei**
**00840 Helsinki (FI)**
• **PELTOVUORI, Mikko**
**48400 Kotka (FI)**
• **HARTIKAINEN, Juha**
**06530 Kerkkoo (FI)**

(74) Representative: **Dehns**
**St. Bride's House**
**10 Salisbury Square**
**London EC4Y 8JD (GB)**

(56) References cited:
**EP-A1- 0 997 268**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention is related to compatible heterogeneous polymer blends of polyethylene and polyamide, whereby the matrix of the blend comprises the polyethylene, which is a special linear low density polyethylene in native or recycled form, optionally in combination with a compatibilizer.
In a preferred embodiment the polyamide of the compatible heterogeneous blend is a postconsumer (i.e. recycled) polyamide, which can optionally contain at least one further polymer, like polyethylene. Such a recycled polyamide can originate from multilayer films being composed of polyolefins (e.g. polyethylene) as a major constituent and a polyamide barrier layer.

**Background**

Compatible polyamide (PA) /polyethylene (PE) blends are of particular interest. Polyamides generally exhibit good strength and resistance to hydrocarbon solvents, while polyethylene contributes low temperature toughness and low moisture sorption, thus by blending new property combinations can be reached.
Blends of polyamide and polyethylene are therefore used in several different application fields, like films for packaging, injection and blow moulded articles, extruded sheets, agricultural films, industrial liners, profiles, pipes, etc..
Unfortunately most of PAs and PEs are highly immiscible resulting in blends with poor adhesion among its phases, coarse morphology and consequently poor mechanical properties.
The compatibility between the phases of such blends can be improved by the addition of compatibilizers, which results in a finer and more stable morphology, better adhesion between the phases of the blends and consequently better properties of the final product. From literature several kinds of compatibilizers suitable for PA/PE blends are known, like block copolymers or polymers modified by grafting, e.g. maleic anhydride grafted polyethylenes.
Nowadays, the attempt of using recycled polymers, originating from recovered waste plastic material derived from post-consumer and/or post-industrial waste for the manufacturing of new products is of increasing interest and importance for ecological reasons and for reducing costs.
Recycling of such waste plastic material can be sometimes rather difficult because many plastic applications, like packaging materials, contain more than just one type of plastic.
For example multilayer packaging films comprise often at least three different layers, which are mostly composed of polyolefins as a major constituent with a polyamide barrier layer, which are basically non-disposable materials under atmospheric conditions.
And as already described above most used thermoplastics, like PE and PA are immiscible with each other due to the large dimensions of the macromolecules and differences in the polarity, thus the mechanical recycling of such materials may result in blends with minimal adhesion between the blend phases and, hence, the mechanical properties of the end products are weak.
To solve this problem again the use of compatibilizers suitable for blends comprising multicomponent recycled material, like block copolymers or polymers modified by grafting, e.g. maleic anhydride grafted polyethylenes, has been suggested.
Furthermore it would be appreciated if the content of recycled material in such a blend could be increased, i.e. by using recycled multimodal, like bimodal material as matrix material in preparing such compatibilized blends.
Thus, although a lot of research work has already been done related to heterogeneous polyamide/polyethylene blends optionally containing recycled polyamide material and how to improve their compatibility, there remains still the need for further improvement in this area.
It was therefore an objective of the present invention to find compatible heterogeneous polymer blends of polyethylene and polyamide, optionally in combination with a special compatibilizer precursor and whereby the polyamide of the compatible heterogeneous blend can also be a postconsumer (i.e. recycled) polyamide, which can optionally contain at least one further polymer, like polyethylene.
The finding of the present invention is that with a special kind of polyethylene as matrix, being a bimodal linear low density polyethylene, optionally in combination with a special compatibilizer, compatible heterogeneous blend with polyamide with good stiffness as well as good impact strength and strain at break of PA/PE-blends can be achieved, whereby the polyamide can be a neat polyamide or a recycled polyamide.
Thus the present invention is directed to compatible heterogeneous polyamide-polyethylene blends comprising

(A) 30 to 98 wt% of a matrix comprising a linear low density polyethylene with a density (ISO 1183) of 900 to 940 kg/m$^3$ containing at least one $C_3$-$C_{10}$ $\alpha$-olefin comonomer in addition to ethylene, which has been produced in a process using a Ziegler-Natta catalyst and comprising

(A-1) 25 to 55 wt% of a low molecular weight fraction being an ethylene homopolymer or a copolymer of ethylene and at least one $C_3$-$C_{10}$ $\alpha$-olefin comonomer and

(A-2) 45 to 75 wt% of a high molecular weight fraction being a copolymer of ethylene and at least one $C_3$-$C_{10}$ $\alpha$-olefin comonomer,

so that the linear low density polyethylene has a bimodal molecular weight distribution,

(B) 2 to 70 wt% of a polyamide composition comprising 20 to 100 wt% of a polyamide selected from aliphatic, semi-aromatic or aromatic polyamides with crystalline, semi-crystalline or amorphous structure and 0 to 80 wt% of at least one polyolefin, dispersed in matrix (A) and

(C) 0 to 10 wt% of a compatibilizer being a polyethylene grafted with a mono- or polycarboxylic acid compound or a derivative therefrom as grafting agent, whereby the amount of said grafting agent is from 0.01 to 3.0 parts by weight of the component (C).

In one embodiment the matrix material (A) can be a virgin bimodal linear low density polyethylene.
In a further embodiment the matrix material (A) can be a recycled material, i.e. a recycled bimodal linear low density polyethylene or a blend of virgin and recycled bimodal linear low density polyethylene.
In a preferred embodiment the Component (B) is a recycled material, which is recovered from waste plastic material derived from post-consumer and/or post-industrial waste.
The recycled material can be derived from neat polyamide or from multicomponent material comprising polyamide and at least one polyolefin, e.g. a polyethylene like LDPE or LLDPE.
For the purposes of the present description and of the subsequent claims, the term "recycled material" is used to indicate the material recovered from both post-consumer waste and post-industrial waste. Namely, post-consumer waste refers to objects having completed at least a first use cycle (or life cycle), i.e. having already served their first purpose; while industrial waste refers to the manufacturing scrap which does normally not reach a consumer. Respectively, the term "virgin" denotes the newly- produced materials and/or objects prior to first use and not being recycled.
By using this specific matrix material, i.e. the bimodal linear low density polyethylene (LLDPE) being produced with a Ziegler-Natta catalyst, either in virgin form or as recycled material or as a blend of virgin and recycled material, it is possible to achieve good stiffness as well as good impact strength and strain at break of the blend material with a smaller decrease in strain at break and impact strength as the content of polyamide increases compared to blends using a unimodal polyethylene as matrix material.
In addition by using said specific matrix, either in virgin form or as recycled material or as blend or virgin and recycled material, the addition of a compatibilizer to a blend containing recycled polyamide material is not mandatory in order to achieve satisfying mechanical properties.
The components of the compatible homogeneous blend of the present invention will now be described further:

**Component (A):**

Component (A) is the matrix of the inventive blend.
It comprises a linear low density polyethylene (LLDPE) with a density (ISO 1183) of 900 to 940 kg/m$^3$ containing at least one $C_3$-$C_{10}$ $\alpha$-olefin comonomer in addition to ethylene, which has been produced in a process using a Ziegler-Natta catalyst and comprises

(A-1) 25 to 55 wt% of a low molecular weight fraction being an ethylene homopolymer or a copolymer of ethylene and at least one $C_3$-$C_{10}$ $\alpha$-olefin comonomer and
(A-2) 45 to 75 wt% of a high molecular weight fraction being a copolymer of ethylene and at least one $C_3$-$C_{10}$ $\alpha$-olefin comonomer,

so that the linear low density polyethylene has a bimodal molecular weight distribution.
The bimodal LLDPE polymer of the invention has a density (ISO 1183) of 900 to 940 kg/m$^3$, preferably in the range of 905 to 935 kg/m$^3$, more preferably in the range of from 910 to 930 kg/m$^3$.
The MFR$_2$ of the bimodal LLDPE is in the range of 0.001 to 10 g/10min, preferably 0.01 to 5 g/10min, e.g. 0.05 to 1 g/10min. Generally, MFR$_2$ is less than 5, especially less than 3 g/10min (ISO 1133, 190 °C/min, 2.16 kg load).
The MFR$_5$ of the bimodal LLDPE is in the range of 0.05 to 10 g/10min, preferably 0.1 to 5 g/10min, e.g. 0.2 to 4 g/10min, especially 0.2 to 3 g/10min (ISO 1133, 190 °C/min, 5.0 kg load).
The MFR$_{21}$ of the bimodal LLDPE is in the range of 5 to 150, preferably 10 to 100 g/10min, e.g. 15 to 70 g/10 min (ISO 1133, 190 °C/min, 21.6 kg load).
The FRR (MFR$_{21}$/MFR$_5$) of the bimodal LLDPE is in the range of 10 to 100, preferably 12 to 70, e.g. 15 to 30.
The bimodal LLDPE used in the present invention possess a low xylene soluble fraction. Thus, the XS may be less than 25 wt%, preferably less than 20 wt%.
The bimodal LLDPE may be formed from ethylene along with at least one other $\alpha$-olefin comonomer having 3 to 10 C-atoms, preferably 4 to 8 C-atoms.

Suitable comonomers are therefore e.g. 1-butene, 1-hexene and 1-octene.

The bimodal LLDPE is composed of the fractions: a low molecular weight (LMW) fraction and a high molecular weight (HMW) fraction, whereby the LMW fraction can also be a homopolymer of ethylene.

If the LMW fraction is a copolymer, the HMW fraction can contain at least one comonomer which is the same as one employed in the LMW fraction. It is possible for both fractions to be polymers of ethylene and 1-butene (or ethylene and 1-hexene and so on) although it will be appreciated that both fractions are different even if the same comonomer is used in both components.

It is thus preferred that the LLDPE used in the present invention has a bimodal comonomer content distribution.

By definition for example, the molecular weight of the two components must be different. Preferred comonomer combinations include (LMW/HMW) 1-butene/1-butene, 1-butene/1-hexene, 1-hexene/1-butene and 1-hexene/1-hexene.

So in this case the bimodal LLDPE can be a copolymer as well as a terpolymer.

It is also possible that one or both of the LMW and HMW fractions can contain two copolymers like 1-butene and 1-hexene.

A further possibility is the combination of polyethylene homopolymer LMW fraction and a HMW fraction containing ethylene and two comonomers, preferably ethylene and 1-butene and 1-hexene. Thus the HMW fraction is a terpolymer.

In a preferred embodiment the bimodal LLDPE comprises a LMW and a HMW fraction, which are both ethylene/1-butene copolymers with different molecular weight and different comonomer content.

The amount of comonomer present in the bimodal LLDPE as a whole is preferably 1 to 20 wt%, preferably from 2 to 12 wt%, more preferably from 3 to 10 wt% relative to ethylene.

As noted above, the bimodal LLDPE used as matrix in the present invention comprises a low molecular weight fraction (LMW) and a high molecular weight (HMW) fraction.

Usually, a polyethylene, e.g. LLDPE composition, comprising at least two polyethylene fractions, which have been produced under different polymerization conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer, e.g. LLDPE, will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

This also applies to the comonomer content.

The LMW fraction has a lower molecular weight than the high molecular weight fraction.

*LMW fraction:*

The low molecular weight fraction of the bimodal LLDPE has a $MFR_2$ of at least 10 g/10 min, preferably of at least 100 g/10min and more preferably 110 to 3000 g/10min, e.g. 110 to 500 g/10min, especially 200 to 400 g/10min.

The density of the low molecular weight fraction may range from 920 to 980 $kg/m^3$, preferably from 940 to 970 $kg/m^3$ and more preferably from 945 to 965 $kg/m^3$,

The amount of LMW fraction forms 25 to 55 wt%, preferably 35 to 52 wt% and more preferably 41 to 48 wt%, of the bimodal LLDPE.

The lower molecular weight component can be an ethylene homopolymer (i.e. where ethylene is the only monomer present) but is preferably an ethylene copolymer, especially where only one comonomer is present. Especially preferably it is a copolymer of ethylene and 1-butene.

The comonomer content in the LMW component is preferably kept lower than that of the HMW component. Comonomer contents of the order of less than 10 wt% are appropriate, preferably less than 5wt%.

*HMW Fraction*

The high molecular weight fraction should have a lower $MFR_2$ and a lower density than the lower molecular weight fraction.

The high molecular weight fraction should have an $MFR_2$ of less than 1 g/10 min, preferably less than 0.5 g/10 min, especially less than 0.2 g/10min.

The $MFR_{21}$ of the HMW fraction should be less than 20, preferably less than 10 g/10min, and more preferably less than 8 g/10 min.

The high molecular weight fraction should have a density of less than 915 kg/m$^3$, e.g. less than 913 kg/m$^3$, preferably less than 912 kg/m$^3$, especially less than 910 kg/m$^3$.

It is also preferred however that the density of the HMW fraction is greater than 890 kg/m$^3$. Ideally, the density should be in the range 895 to 912 kg/m$^3$.

The high molecular weight fraction forms 75 to 45 wt%, preferably 65 to 48 wt% and more preferably 59 to 52 wt%, of the bimodal LLDPE.

The high molecular weight fraction is preferably an ethylene copolymer, in particular a binary copolymer (i.e. where only one comonomer is present) or a terpolymer (with two comonomers).

Where the LMW fraction is a homopolymer, the HMW fraction preferably contains at least 2 $\alpha$-olefin comonomers.

The amount of comonomer present in the HMW differs from the amount of comonomer present in the LMW fraction, in order to get the desired bimodal comonomer content distribution.

It should be noted that comonomer amounts in HMW component cannot be measured directly (in a process where the HMW component is formed second in a multistage process), but may be calculated based on the amount of the LMW component present and of the final polymer as well as knowledge of the production split.

*Further Components of the bimodal LLDPE*

The bimodal LLDPE may comprise other polymer components over and above the LMW and HMW fractions. For example, the polymer may contain up to 10 wt% of a polyethylene prepolymer (obtainable from a pre-polymerization step as well known in the art). In case of such prepolymer, the prepolymer component may be comprised in one of LMW and HMW fraction, preferably LMW fraction, as defined above.

As is common knowledge, the amounts of all components sum up to 100% for component (A).

*Manufacture*

Bimodal LLDPE polymers may be prepared for example by mechanical blending of two separately prepared polymer components or preferably by in-situ blending in a multistage polymerization process during the preparation process of the polymer components.

A further possibility is the polymerization of the two components by using two different Ziegler Natta polymerization catalysts in a one stage polymerization process.

It is important, however, to ensure that the high and low molecular weight fractions are intimately mixed prior to extrusion. This is most advantageously achieved by using a multistage process.

Preferably the bimodal LLDPE is produced in a two-stage polymerization using the same Ziegler-Natta catalyst in both steps.

Preferably the bimodal LLDPE is made using a slurry polymerization in a loop reactor followed by a gas phase polymerization in a gas phase reactor.

A loop reactor - gas phase reactor system is marketed by Borealis as a BORSTAR reactor system.

Any bimodal LLDPE used as matrix material according to the present invention is preferably formed in a two stage process comprising a first slurry loop polymerization followed by gas phase polymerization.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerization may also be carried out in bulk where the reaction medium is formed from the monomer being polymerized.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a nonreactive gas such as nitrogen or low boiling point hydrocarbons such as propane together with monomer (e.g. ethylene).

Preferably, the low molecular weight fraction is produced in a continuously operating loop reactor where ethylene is polymerized optionally in the presence of comonomer(s), a Ziegler Natta polymerization catalyst with conventional cocatalysts, i.e. compounds of Group 13 metal, like Al alkyl compounds, and a chain transfer agent such as hydrogen. The diluent is typically an inert aliphatic hydrocarbon, preferably isobutane or propane.

The high molecular weight fraction can then be formed in a gas phase reactor using the same catalyst.

Where the HMW fraction is made as a second step in a multistage polymerization it is not possible to measure its properties directly. However, e.g. for the above described polymerization process of the present invention, the density, $MFR_2$ etc. of the HMW fraction can be calculated using Kim McAuley's equations. Thus, both density and $MFR_2$ can be

found using K. K. McAuley and J. F. McGregor: On-line Inference of Polymer Properties in an Industrial Polyethylene Reactor, AIChE Journal, June 1991, Vol. 37, No, 6, pages 825-835. The density is calculated from McAuley's equation 37, where final density and density after the first reactor is known. $MFR_2$ is calculated from McAuley's equation 25, where final $MFR_2$ and $MFR_2$ after the first reactor is known.

All components of the bimodal LLDPE are made using a Ziegler Natta catalyst.
Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide.

Examples of such catalysts are given, among others in WO 95/35323, WO 01/55230, WO 2004/000933, WO 2004/000902, EP 810235 and WO 99/51646.

In one embodiment a catalyst of Ziegler Natta type, wherein the active components are dispersed and solidified within Mg-based support by the emulsion/solidification method adapted to PE catalyst, e.g. as disclosed in WO03/106510 of Borealis, e.g. according to the principles given in the claims thereof.

In another preferable embodiment, the catalyst is a non-silica supported catalyst, i.e. the active components are not supported to an external silica support. Preferably, the support material of the catalyst is a Mg-based support material. Examples of such preferred Ziegler-Natta catalysts are described in EP 0 810 235.

In a very preferable embodiment of the invention the polyethylene composition is produced using a ZN catalysts disclosed in EP 688794, EP 835887, WO 2004/000933, WO 2004/000902 or WO 2004/106393.

Conventional cocatalysts, supports/carriers, electron donors etc. can be used.

Such bimodal LLDPEs are furthermore commercially available from Borealis under the trade names FB2230, FB2269, FB4230, FB4370, FB2310, FB 3450, FX1001, FX1002 etc..

The bimodal LLDPE can be used as virgin material as well as recycled material to form the matrix (A). It is also possible to use a blend of a virgin material and a recycled material.

If the bimodal LLDPE is used as recycled material, then this material originates from recovered both post-consumer waste and post-industrial waste, which is re-granulated.

**Component (B):**

Component (B) of the inventive blend is a polyamide composition, which is dispersed in the above described matrix (A).
The composition can comprise 100% of polyamide or, in case that a recycled multicomponent material is used, at least 20 wt% of polyamide.

The polyamide can be selected from aliphatic, semi-aromatic or aromatic polyamides, which can have crystalline, semi-crystalline or amorphous structure.
The polyamide can further be a virgin polyamide or a recycled material comprising polyamide.

Suitable polyamides can be produced by condensation of equimolar amounts of an aliphatic or aromatic dicarboxylic acid containing from 4 to 12 carbon atoms with a diamine, in which the diamine contains from 4 to 14 carbon atoms. Excess diamine can be employed to provide an excess of amine end groups over carboxyl end groups in the polyamide.

Examples of polyamides include polyhexamethylene-adipamide (Nylon 66), polyhexamethylene azelaamide (Nylon 69), polyhexamethylene sebacamide (Nylon 610), and polyhexamethylene dodecanoamide (612 Nylon), and polyamides produced by ring opening of lactams, i.e., polycaprolactam (Nylon 6), polylauric lactam, poly-11-aminounde-canoic acid, bisφparaaminocyclohexyl) methane dodecanoamide.

It is also possible to use in this invention polyamides prepared by the copolymerization of two of the above polymers or terpolymerization of the above polymers or their components, e.g., 6T/DT, a copolymer of terephthalic acid (T) and 2-methylpentamethylenediamine (D) and hexamethylenediamine (6).

Preferably the polyamides are semi-crystalline and aliphatic or semi-aromatic with a melting point in excess of 200°C, or they are amorphous.

Preferred polyamides include Nylon 6,6, Nylon 6, Nylon 612, Nylon 11, Nylon 12, Nylon 1212, amorphous nylons, Nylon 6/6,6 copolymers.

Most preferred polyamides include Nylon 6,6, Nylon 612 and Nylon 6. It is to be understood that this component may comprise blends of two or more nylons.

As stated already above, the polyamide can be virgin material or can be a polyamide which is derived from recycled material.
In case of recycled material this material can be composed of neat polyamide, i.e. polyamide only, or the material can be a multicomponent material comprising polyamide and at least one polyolefin.
In case of a multicomponent material the amount of the polyamide can be up to 60 wt%, preferably up to 55 wt%, whereby the rest up to 100% is the at least one polyolefin.

The at least one polyolefin is preferably polyethylene, like LDPE or LLDPE, etc..

Such a multicomponent material can contain up to 5 different polyolefins and can originate from multilayer films used in the packaging area for example. Such multilayer films are mostly composed of polyolefins, preferably polyethylenes, as major constituent and of polyamide, which is used as barrier layer.

Furthermore it is common practice that such multilayer films also contain a tie layer, which is located between the polyamide layer and the polyolefin layers in order to create interlayer adhesion.

In addition such multilayer films typically contain usual additives, like antioxidants, slip agents, antiblock agents, antifogging agents, pigments, antistatic agents, etc..

**Component (C):**

The inventive blend can further comprise an optional compatibilizer, which is also dispersed in the matrix (A).

A suitable optional compatibilizer is polyethylene which is grafted with a mono- or polycarboxylic acid compound or a derivative therefrom as grafting agent.

Such grafted polyethylenes are known in the state of the art and are commercially available, for example from DuPont, Uniroyal, Exxon, Aldrich Chemical Company, AkzoNobel, DOW, Borealis, BASF, etc..

The to be grafted polyethylene can be any polyethylene selected from linear ethylene polymers like linear low density polyethylene (LLDPE), linear medium density polyethylene (LMDPE), high density polyethylene (HDPE), very low density polyethylene (VLDPE), etc. produced in a low pressure processes and from polyethylene produced in a high pressure polymerization process by free radical polymerization (LDPE).

The polyethylenes can be homopolymers or copolymers.

The linear polyethylenes can be produced by a variety of methods using conventional catalysts, like Ziegler-Natta catalysts, Phillips type catalysts or metallocene catalysts.

The term "linear" means that in these polymers branched chains of polymerized monomer units pendant from the main polymer "backbone" are substantially absent, whereas LDPE polymers contain branched chains of polymerized monomer units pendant from the main polymer "backbone"

The polyethylene produced in a high pressure polymerization process by free radical polymerization (LDPE) can be a homopolymer or a copolymer of ethylene with comonomers selected from alpha-olefin $C_3$ to $C_{12}$ comonomers or polar comonomers, like $C_1$-$C_6$-alkyl acrylates, $C_1$-$C_6$-alkyl methacrylates or acetates, e.g. vinylacetat.

Suitable polymers are for example ethylene-methylacrylate (EMA), ethylene-methylmethacrylate (EMMA), ethylene-propylacrylate and ethylene-butylacrylate (EBA).

The high pressure polymerization process can be performed in well-known tubular or autoclave reactors or mixtures thereof, preferably in tubular reactors.

In case the to be grafted polyethylene is a linear polyethylene, the polyethylene can be a homopolymer (HDPE) or a copolymer of ethylene with one or more alpha-olefin $C_3$ to $C_{12}$ comonomers, preferably $C_4$ to $C_8$ comonomers and optionally polar comonomers, like $C_1$-$C_6$-alkyl acrylates, $C_1$-$C_6$-alkyl methacrylates.

Suitable comonomers are propylene 1-butene, 1-pentene, 1-hexene, 4-methyl-1-pentene, 1-octene and mixtures thereof. Particularly preferred comonomers are 1-butene, 1-hexene, 4-methyl-1-pentene and 1-octene. The most preferred $\alpha$-olefin comonomer is 1-hexene.

The linear copolymer may have a density in the range of about 850 kg/m$^3$ to about 970 kg/m$^3$, preferably about 890 kg/m$^3$ to about 960 kg/m$^3$ and most preferably about 920 kg/m$^3$ to about 945 kg/m$^3$.

Preferably used are linear low density polyethylenes (LLDPE), which have been produced by using a Ziegler-Natta catalyst or a metallocene catalyst. More preferably the to be grafted polyethylene is a linear low density polyethylenes (LLDPE), which has been produced by using a metallocene catalyst.

The melt flow rate MFR$_2$ of preferred LLDPEs is in the range of 1 to 20 g/10min, more preferably in the range of 1 to 10 g/10min.

MFR$_2$ is measured according to ISO 1133 (Cond. 4) at a temperature of 190°C under a load of 2.16 kg.

It is evident to practitioners of the relevant arts that the density will depend, in large part, on the used as comonomer(s) and on the amount of said comonomer(s) incorporated into the copolymer.

The comonomer(s) copolymerized with ethylene to make LLDPE comprises about 0.5% to about 35% by weight of the copolymer, preferably about 1% to about 20%, most preferably about 2% to about 15%.

As grafting agent any mono- or polycarboxylic acid compound or a derivative therefrom can be used, which is known to be suitable for this purpose by the person skilled in the art. Preferably, the grafting agent is an unsaturated mono- or polycarboxylic acid or a derivative thereof such as anhydrides, esters and salts (both metallic and non-metallic). Preferably, the unsaturated group is in conjugation with the carboxylic group.

Examples of such grafting agents include acrylic acid, methacrylic acid, fumaric acid, maleic acid, nadic acid, citraconic acid, itaconic acid, crotonic acid, and their derivatives, like anhydrides, metal salts, esters, amides or imides, e.g. maleic acid anhydride, glycidyl methacrylate, acrylamide, maleimide, etc..

The preferred grafting agents are maleic acid and its derivatives such as maleic anhydride, and in particular maleic anhydride.

Grafting can be carried out by any process known in the art such as grafting in a melt without a solvent or in solution or dispersion or in a fluidised bed. Preferably, grafting is performed in a heated extruder or mixer, e.g. in a twin screw extruder.

Grafting may be carried out in the presence or absence of a radical initiator but is preferably carried out in the presence of a radical initiator such as an organic peroxide, organic perester or organic hydroperoxide.

The amount of said grafting agent added to the polyethylene is preferably from 0.01 to 3.0 parts by weight, more preferably from 0.03 to 1.5 parts by weight of the compatibilizer (C).

Such grafted LLDPEs) are commercially available, for example from Du Pont (MB110 with 0.9 % of maleic acid; MB158 with 0.3 % of maleic acid; etc.) or from DOW (e.g. AMPLIFY™ GR 380, grafted with maleic acid anhydride) or from Arkema Group (e.g. Orevac® 18302 and Orevac® OE807, maleic anhydride modified LLDPEs) or from Borealis (e.g. BorCoat™ ME0420, i.e. a maleic anhydride grafted polyethylene), etc..

Conventional additives may also be present in the compatibilizer in small amounts preferably up to at most 4 wt%. For example, an antioxidant may be present in an amount of at most 10,000 ppm, more preferably at most 5,000 ppm and most preferably at most 3,000 ppm.

Conventional additives may be added before or after grafting.

As is common knowledge, the amounts of polyethylene, grafting agent and optional conventional additives sum up to 100% for the compatibilizer (C).

*Compatible homogeneous blend*

The blend of the present invention comprises components (A) and (B) and optionally component (C).

The amount of component (A) is 30 to 98 wt%, preferably 40 to 97 wt%.

The amount of component (B) is 2 to 70 wt%, preferably 3 to 60 wt%.

The amount of component (C) is 0 to 10 wt%, preferably 2 to 8 wt%.

As is common knowledge the amounts of components (A), (B) and (C) sum up to 100% for the inventive blend.

The inventive compatible heterogeneous blend, using the specific matrix material, i.e. the bimodal linear low density polyethylene (LLDPE) being produced with a Ziegler-Natta catalyst, shows good stiffness as well as good impact strength and strain at break with a smaller decrease in strain at break and impact strength as the content of polyamide increases compared to blends using a unimodal polyethylene as matrix material.

In addition by using said specific matrix the addition of a compatibilizer to a blend containing recycled polyamide material is not mandatory in order to achieve satisfying mechanical properties.

A further advantage is that the matrix material, i.e. the bimodal LLDPE, can be used in virgin form as well as in recycled, re-granulated form or as a blend of virgin and recycled material in order to achieve satisfying mechanical properties.

Thus the inventive compatible heterogeneous blend is suitable for being used for films for packaging, injection and blow moulded articles, extruded sheets, agricultural films, industrial liners, profiles, pipes, etc..

**EXPERIMENTAL PART**

**A) METHODS**

**Density**

The Density of the polymer was measured according to ISO 1183-1:2004 Method A on compression moulded specimen prepared according to EN ISO 1872-2 (Feb 2007) and is given in $kg/m^3$.

**MFR**

The Melt flow rate was studied according to the standard SFS-EN ISO 1133-1 Plastics - Determination of the melt mass-flow rate (MFR) and melt volume-flow rate (MVR) of thermoplastics - Part 1: Standard method. The standard specifies the methods for determination of the melt mass flow rate (MFR) of thermoplastic materials under specific conditions of temperature and load.

The measurements were conducted under 2.16 kg weigh at the temperature of 230 °C. The melt flow rates were analysed by measuring the weight of the extrudate coming through the die within 1.0 minute, taking an average on 3 measurements and multiplying the value by 10 to get the final value for the melt flow in 10 minutes.

**Comonomer Content**

Comonomer content of the obtained products was measured with Fourier transform infrared spectroscopy (FTIR) calibrated with $^{13}$C-NMR.

**Charpy Notched impact strength**

Charpy Notched impact strength is measured according the ISO standard ISO 179-1 Plastics - Determination of Charpy impact properties - Part 1: Non-instrumented impact test.
Specimens machined from the compress moulded sheets into ISO 179-1/1eA specimens, with the dimensions of: length l = 80 ± 2 mm, width, b = 10.0 ± 0.2 mm and thickness, h = 4.0 ± 0.2 mm were used. The type A notch with depth of 2 ± 0.2 mm and the notch tip radius of $r_N$ = 0.25 ± 0.05 mm was machined on the edge of the specimen. The specimens were conditioned in the standard atmosphere (23 ± 2 °C and 50 ± 5 % of relative humidity) for at least 16 hours prior to testing.
The tests were also conducted in the standard atmosphere by using Zwick pendulum-type testing machine and a 4.0 kJ hammer. At least 10 specimens were tested per sample. After the impact the break types were assessed visually between the categories complete break, CB, hinge break, HB, partial break, PB and no break, NB.

**Tensile test**

The tensile properties were determined according to ISO 527-1 Plastics - Determination of tensile properties - Part 1: General principles. The standard specifies the general principles for the testing procedure, conditions and the test specimens.
The tensile specimens were die cut from the produced 4 mm thick sheets by using a specific die for dumbbell shaped 1A test specimen according to ISO 527-2. Prior to testing the specimens were conditioned for at least 16 hours in the standard atmosphere and the tests were conducted in the same atmospheric conditions.
The tensile tests were conducted by using Zwick/Roell universal testing machine. At least 5 specimens were tested for each sample and the results are presented as the average of these 5 results. The test speed was 1 mm/min until the tensile modulus, that is, until the elongation of 0.25 % and after that the speed was 50 mm/min. The properties studied in the tensile test were tensile modulus ($E_t$), tensile stress ($\sigma_M$), stress at yield ($\sigma_Y$), elongation at yield ($\varepsilon_Y$), stress at break ($\sigma_B$), elongation at break ($\varepsilon_B$), and nominal elongation at break ($\varepsilon_{tB}$).

**B) EXAMPLES**

**COMPONENT (A)**

**Preparation of the catalyst:**

The catalyst has been prepared according to Example 1 of WO 2004/000933

**Polymerization**

Component (A) was prepared in a pilot scale multistage reactor system containing a loop reactor and a gas phase reactor. A pre-polymerization step preceded the actual polymerization step. The pre-polymerization stage was carried out in slurry in a 50 dm$^3$ loop reactor at about 80 °C in a pressure of about 65 bar using the polymerization catalyst prepared according to Example 1 of WO 2004/000933 and triethylaluminium as the cocatalyst.
The molar ratio of aluminium of the cocatalyst to titanium of the catalyst was about 20. Ethylene was fed in a ratio of (200g of C$_2$)/(1g/catalyst). Propane was used as the diluent and hydrogen was fed in amount to adjust the MFR$_2$ of the prepolymer to about 10 g/10 min. The obtained slurry together with pre-polymerized catalyst and triethylaluminium cocatalyst were transferred to the actual polymerization step, i.e. introduced into a 500 dm$^3$ loop reactor, wherein a continuous feed of propane, ethylene, 1-butene and hydrogen was also introduced.
The loop reactor was operated at 95 °C temperature and 60 bar pressure. The process conditions were adjusted as shown in Table 1 to form polymer having an MFR$_2$ of 300 g/10 min and a density of about 951 kg/m$^3$ at a production rate of about 30 kg/h.

The slurry was then transferred to a fluidised bed gas phase reactor, where additional ethylene, 1-butene comonomer and hydrogen were added, together with nitrogen as an inert gas to produce the HMW component in the presence of the LMW component. The gas phase reactor was operated at a temperature of 80 °C and a pressure of 20 bar. The process conditions were adjusted as shown in Table 1 to form the final polymer.

The reactor powder was then stabilised with conventional additives and pelletized in a known manner using CIM90P counter-rotating twin screw extruder manufactured by Japan Steel Works. The product properties of the pelletized final polymers are given in table 1 below.

**Table 1: Preparation of Component (A):**

| Parameters | Unit | |
|---|---|---|
| Loop reactor | | |
| $C_2$ concentration | [mol%] | 5 |
| $H_2/C_2$ ratio | [mol/kmol] | 300 |
| $C_4/C_2$ ratio | [mol/kmol] | 790 |
| Loop density | [kg/m$^3$] | 951 |
| Loop MFR$_2$ | [g/10 min] | 300 |
| Gas Phase reactor | | |
| $C_2$ partial pressure | [bar] | 4.5 |
| $H_2/C_2$ ratio | [mol/kmol] | 7 |
| $C_4/C_2$ ratio | [mol/kmol] | 700 |
| Production rate | [kg/h] | 75 |
| Split [%GPR] | - | 59 |
| MFR$_5$ of pelletized final polymer | [g/10 min] | 1.2 |
| Density of pelletized final polymer | [kg/m$^3$] | 926 |

**COMPONENT (B)**

*Native polyamide:*

Ultramid B27: A commercially available polyamide 6 grade with a low viscosity referred here as PA-L was used. The density of the PA was $\rho$=1.13 g/cm$^3$.

*Multicomponent recycled material (MCRM (B))*

The recycled multicomponent material was a blend of two different multilayer packaging films known to contain a layer of polyamide for oxygen barrier. Films were received from a film manufacturer in a form of about 40 cm wide film rolls.

The polyamide content of the recycled blend was determined by measuring the basis weight (mass per square meter) of both films and using this value to calculate the density of the films. The basis weight was measured by die-cutting 3 round samples with 100 cm$^2$ area and weighing them. The basis weigh of the film was, hence, the hundredfold value of the average the three measured samples. The total density of a film was assumed to be a function of the weight fraction of PA, when assuming that the rest of the film consists of materials with the density of LDPE, $\rho_{LDPE}$=0.920 g/cm$^3$, according to the following function:

$$\rho_{PA} * x + \rho_{LDPE} * (1 - x) = \rho_{Recyclate},$$

 in which x is the weight fraction of PA. These calculations resulted in 27 and 50 wt% for the two characterized films, respectively. As the blend was prepared in 1:1 weight ratio of the two films, the final amount of polyamide in the blend was thus 38.5 wt%. Due to the inaccuracy of this characterization method a value of 40 wt% has been used as the value for the weight fraction of polyamide in the recycled blend.

The recycled material used in this study was produced by blending the two received film materials together in a weight ratio of 1:1. As the material was in a form of film the blending required some preparations prior to the blending. The films were pressed in about 200 g stacks under elevated temperature (180°C) into 4 mm thick sheets. The sheets were then grinded into small flakes and the different film materials were dry blended. The flake blend was then processed through a Werner & Pfleiderer ZSK30W extruder at the temperature of 240°C. The blend was extruded into strings which were subsequently pelletized for further compounding.

## COMPONENT (C)

As Component C Borcoat™ ME0420, a maleic anhydride grafted polyethylene, commercially available from Borealis, has been used.

## Compatible heterogeneous blend

Several blends were prepared by using Werner & Pfleiderer, ZSK30W, co-rotating twinscrew extruder, with L/D=38. The screw speed was kept at 150-200 rpm, the screw temperatures were 200-240°C.
The compounds were processed by dry blending the blend components in a form of pellets and reactively compounding them by feeding in to the extruder via a hopper and extruding into strands. The strands were subsequently cooled in a water bath and cut into small pellets by strand pelletizer.
If a compatibilizer was used, the matrix compounds were prepared by dry blending the neat compound (A) with 5 wt% of component (C) (i.e. maleic anhydride grafted compatibilizer) and processing the blends through the extruder. If no component C has been added, matrix material has been used in virgin form.
After this, the matrix compounds as prepared above or the neat matrix material (only component (A)) were blended in different ratios with the low viscosity polyamide, PA-L.
The polyamide was dried for approximately 15 hours at 75 °C in order to remove the excess moisture as polyamide is a hydrophilic material and the excess moisture could cause volatilities during processing and cause hydrolysis in the PA chains.
The compounds with the recycled material were prepared in a same manner.
As **comparative Examples CE1-CE4** blends using an unimodal PE as matrix were used. The unimodal PE was HE2591 commercially available from Borealis having a density of 944 kg/m$^3$ and $MFR_{21}$ of 10 g/10 min (190°C), produced with a Cr-catalyst.
The unimodal matrix is named A-U

**Table 2: blend compositions:**

| Examples | Ref.1 | Ref.2 | Ex1 | Ex2 | Ex3 | Ex4 | CE1 | CE2 | CE3 | CE4 |
|---|---|---|---|---|---|---|---|---|---|---|
| **Blend components** | [wt%] | [wt%] | [wt%] | [wt%] | [wt%] | [wt%] | [wt%] | [wt%] | [wt%] | [wt%] |
| **Matrix (A)** | 100 | | 95 | 90.25 | 80.75 | 70 | | | | |
| **Matrix (A-U)** | | 100 | | | | | 95 | 90.25 | 80.75 | 70 |
| **(C)** | | | 5 | 4.75 | 4.25 | 0 | 5 | 4.75 | 4.25 | 0 |
| **Neat PA (B)*** | | | | 5 | 15 | 0 | | 5 | 15 | 0 |
| **MCRM (B)**** | | | | | | 30 | | | | 30 |
| **Screw speed [rpm]** | | | 200 | 200 | 200 | 150 | 200 | 200 | 200 | 200 |
| **T melt [°C]** | | | 206 | 246 | 245 | 243 | 240 | 249 | 248 | 248 |
| **Throughput [kg/h]** | | | 9 | 9 | 9 | 5 | 5 | 5 | 5 | 5 |
| * neat PA (B) is the native low viscosity polyamide as described above <br> ** MCRM (B) is the multicomponent recycled material used as component (B) as described above <br> (C) is the compatibilizer <br> Ref is the reference example containing only matrix material (A) | | | | | | | | | | |

The mechanical properties of the blends were studied by tensile tests and Charpy Notched impact tests.
The results are shown in Table 3 and 4 with actual numerical values as well as with the change (Δ) in percentage (compared to reference materials: Ex1 - Ex4 compared to Ref.1; CE1 to CE4 compared to Ref.2, rounded to one decimal place).

## Table 3: Tensile Tests:

| Ex. | Tensile Modulus | Δ +/- | Stress at Yield | Δ +/- | Strain at Yield | Δ +/- | Stress at Break | Δ +/- | Strain at Break | Δ +/- |
|---|---|---|---|---|---|---|---|---|---|---|
| Unit | [MPa] | % | [MPa] | % | % | % | [MPa] | % | % | % |
| Ref.1 | 342 | | 11.3 | | 14 | | 24.5 | | 800 | |
| Ex1 | 350 | 2.3 | 11.4 | 0.9 | 14 | 0 | 23.8 | 2.9 | 800 | 0 |
| Ex2 | 428 | 25.1 | 12.2 | 8.0 | 11 | 21.4 | 20.1 | 18.0 | 590 | 26.3 |
| Ex3 | 504 | 47.4 | 13.3 | 17.7 | 10.6 | 24.3 | 15.3 | 37.6 | 412 | 48.5 |
| Ex4 | 424 | 24.0 | 12.3 | 8.9 | 13 | 7.1 | 15.5 | 36.7 | 450 | 43.8 |
| Ref.2 | 776 | | 22 | | 11 | | 33.4 | | 860 | |
| CE1 | 744 | 4.1 | 21.3 | 3.2 | 11 | 0 | 28.6 | 14.4 | 730 | 15.1 |
| CE2 | 760 | 2.1 | 21.2 | 3.6 | 9.8 | 10.9 | 25.7 | 23.1 | 650 | 24.4 |
| CE3 | 825 | 6.3 | 21.9 | 0.5 | 8.7 | 20.9 | 19.7 | 41.0 | 18 | 97.9 |
| CE4 | 676 | 12.9 | 19.2 | 12.7 | 11 | 0 | 14.1 | 57.8 | 41 | 95.2 |

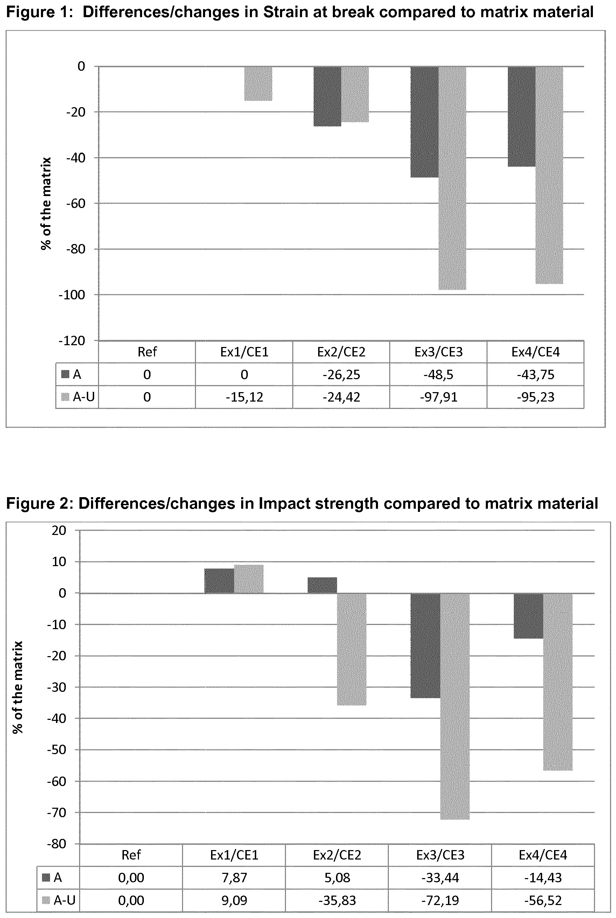

As can be seen from Table 3 and Figure 1 the inventive blend with the bimodal matrix leads to a smaller decrease in strain at break when the content of polyamide or recycled material is increased in the blend compared to blends using a unimodal matrix.

Strain at break is an important parameter for the ductility of a material, that is, the measure of the extent to which material will deform before fracture. It is an important factor when forming the material, such as rolling and extrusion.

## Table 4: Charpy Notched impact test

| Ex. | Impact Strength | Δ +/- |
|---|---|---|
| Unit | [kJ/m$^2$] | % |
| Ref.1 | 61 | |
| Ex1 | 65.8 | +7.9 |
| Ex2 | 64.1 | +5.1 |
| Ex3 | 40.6 | -33.4 |
| Ex4 | 52.2 | -14.4 |
| Ref.2 | 18.7 | |
| CE1 | 20.4 | 9.1 |
| CE2 | 12 | -35.8 |
| CE3 | 5.2 | -72.2 |
| CE4 | 8.13 | -56.5 |

As can be seen from Table 4 and Figure 2 the inventive blend with the bimodal matrix leads to a smaller decrease in impact strength when the content of polyamide or recycled material is increased in the blend compared to blends using a unimodal matrix.

**Claims**

1. Compatible heterogeneous polyamide-polyethylene blends comprising

    (A) 30 to 98 wt% of a matrix comprising a linear low density polyethylene with a density (ISO 1183) of 900 to 940 kg/m$^3$ containing at least one $C_3$-$C_{10}$ $\alpha$-olefin comonomer in addition to ethylene, which has been produced in a process using a Ziegler-Natta catalyst and comprising

       (A-1) 25 to 55 wt% of a low molecular weight fraction being an ethylene homopolymer or a copolymer of ethylene and at least one $C_3$-$C_{10}$ $\alpha$-olefin comonomer and
       (A-2) 45 to 75 wt% of a high molecular weight fraction being a copolymer of ethylene and at least one $C_3$-$C_{10}$ $\alpha$-olefin comonomer,

    so that the linear low density polyethylene has a bimodal molecular weight distribution,
    (B) 2 to 70 wt% of a polyamide composition comprising 20 to 100 wt% of a polyamide selected from aliphatic, semi-aromatic or aromatic polyamides with crystalline, semi-crystalline or amorphous structure and 0 to 80 wt% of at least one polyolefin, dispersed in matrix (A) and
    (C) 0 to 10 wt% of a compatibilizer being a polyethylene grafted with a mono- or polycarboxylic acid compound or a derivative therefrom as grafting agent, whereby the amount of said grafting agent is from 0.01 to 3.0 parts by weight of the component (C).

2. Compatible heterogeneous polyamide-polyethylene blends according to claim 1 wherein the matrix (A) can be a virgin bimodal linear low density polyethylene or a recycled bimodal linear low density polyethylene or a blend of virgin and recycled bimodal linear low density polyethylene.

3. Compatible heterogeneous polyamide-polyethylene blends according to claim 1 or 2 wherein the linear low density polyethylene of matrix (A) has a bimodal comonomer content distribution.

4. Compatible heterogeneous polyamide-polyethylene blends according to anyone of the preceding claims, wherein component (B) can comprise

    - 100 wt % of native or recycled polyamide or
    - a recycled material being a multicomponent material comprising 20 wt% up to 60 wt% of polyamide and at least one polyolefin in an amount of 40 to 80 wt% of component (B).

5. Compatible heterogeneous polyamide-polyethylene blends according to claim 4, wherein the multicomponent material originates from a multilayer film used in the packaging area, whereby such films are composed of polyolefins, preferably polyethylenes, as major constituent and of polyamide, which is used as barrier layer and optional tie layer and usual additives.

6. Compatible heterogeneous polyamide-polyethylene blends according to anyone of the preceding claims, wherein the polyethylene of component (C) can comprise linear ethylene polymers selected from linear low density polyethylene (LLDPE), linear medium density polyethylene (LMDPE), high density polyethylene (HDPE), very low density polyethylene (VLDPE) produced in a low pressure processes and polyethylene produced in a high pressure polymerization process by free radical polymerization (LDPE).

7. Compatible heterogeneous polyamide-polyethylene blends according to claim 6, wherein the linear ethylene is a linear low density polyethylene (LLDPE), which has been produced by using a metallocene catalyst.

8. Compatible heterogeneous polyamide-polyethylene blends according to anyone of the preceding claims, wherein the grafting agent of component (C) is an unsaturated mono- or polycarboxylic acid or a derivative thereof selected from anhydrides, esters, amides, imides and salts.

**EP 3 331 950 B1**

9. Compatible heterogeneous polyamide-polyethylene blends according to claim 8, wherein the acid grafting agent of component (C) is maleic acid or maleic acid anhydride.

10. Use of a compatible heterogeneous polyamide-polyethylene blends according to anyone of the preceding claims for films for packaging, injection and blow moulded articles, extruded sheets, agricultural films, industrial liners, profiles, pipes.

**Patentansprüche**

1. Kompatible heterogene Polyamid-Polyethylen-Mischungen, umfassend:

(A) 30 bis 98 Gew.-% einer Matrix, umfassend ein lineares Polyethylen niedriger Dichte mit einer Dichte (ISO 1183) von 900 bis 940 kg/m$^3$, das mindestens ein $C_3$-$C_{10}$-$\alpha$-Olefin-Comonomer zusätzlich zu Ethylen enthält, das in einem Verfahren unter Verwendung eines Ziegler-Natta-Katalysators hergestellt wurde und umfasst:

(A-1) 25 bis 55 Gew.-% einer Fraktion mit niedrigem Molekulargewicht, die ein Ethylenhomopolymer oder ein Copolymer von Ethylen und mindestens einem $C_3$-$C_{10}$-$\alpha$-Olefin-Comonomer ist und
(A-2) 45 bis 75 Gew.-% einer Fraktion mit hohem Molekulargewicht, die ein Copolymer von Ethylen und mindestens einem $C_3$-$C_{10}$-$\alpha$-Olefin-Comonomer ist,

so dass das lineare Polyethylen niedriger Dichte eine bimodale Molekulargewichtsverteilung aufweist,
(B) 2 bis 70 Gew.-% einer Polyamidzusammensetzung, umfassend 20 bis 100 Gew.-% eines Polyamids, ausgewählt aus aliphatischen, halbaromatischen oder aromatischen Polyamiden mit kristalliner, halbkristalliner oder amorpher Struktur und 0 bis 80 Gew.-% von mindestens einem Polyolefin, das in Matrix (A) dispergiert ist und
(C) 0 bis 10 Gew.-% eines Verträglichkeitsvermittlers, der ein Polyethylen ist, das mit einer Mono- oder Polycarbonsäureverbindung oder einem Derivat davon als Pfropfmittel gepfropft ist, wobei die Menge des Pfropfmittels 0,01 bis 3,0 Gew.-% der Komponente (C) beträgt.

2. Kompatible heterogene Polyamid-Polyethylen-Mischungen nach Anspruch 1, wobei die Matrix (A) ein ungebrauchtes bimodales lineares Polyethylen niedriger Dichte oder ein recyceltes bimodales lineares Polyethylen niedriger Dichte oder eine Mischung aus ungebrauchtem und recyceltem bimodalen linearen Polyethylen niedriger Dichte sein kann.

3. Kompatible heterogene Polyamid-Polyethylen-Mischungen nach Anspruch 1 oder 2, wobei das lineare Polyethylen niedriger Dichte der Matrix (A) eine bimodale Comonomer-Gehaltsverteilung aufweist.

4. Kompatible heterogene Polyamid-Polyethylen-Mischungen nach einem der vorstehenden Ansprüche, wobei die Komponente (B)

- 100 Gew.-% natives oder recyceltes Polyamid oder
- ein recyceltes Material umfassen kann, das ein Mehrkomponentenmaterial ist, umfassend 20 Gew.-% bis zu 60 Gew.-% Polyamid und mindestens ein Polyolefin in einer Menge von 40 bis 80 Gew.-% der Komponente (B).

5. Kompatible heterogene Polyamid-Polyethylen-Mischungen nach Anspruch 4, **dadurch gekennzeichnet, dass** das Mehrkomponentenmaterial aus einer im Verpackungsbereich verwendeten Mehrschichtfolie stammt, wobei solche Folien aus Polyolefinen, vorzugsweise Polyethylenen als Hauptbestandteil, und aus Polyamid, das als Sperrschicht und optionale Verbindungsschicht dient, und gewöhnlichen Additiven zusammengesetzt sind.

6. Kompatible heterogene Polyamid-Polyethylen-Mischungen nach einem der vorstehenden Ansprüche, wobei das Polyethylen der Komponente (C) lineare Ethylenpolymere umfassen kann, ausgewählt aus linearem Polyethylen niedriger Dichte (LLDPE), linearem Polyethylen mittlerer Dichte (LMDPE), Polyethylen hoher Dichte (HDPE), Polyethylen sehr niedriger Dichte (VLDPE), hergestellt in einem Niederdruckverfahren, und Polyethylen, hergestellt in einem Hochdruckpolymerisationsverfahren durch radikalische Polymerisation (LDPE).

7. Kompatible heterogene Polyamid-Polyethylen-Mischungen nach Anspruch 6, wobei das lineare Ethylen ein lineares Polyethylen niedriger Dichte (LLDPE) ist, das unter Verwendung eines Metallocenkatalysators hergestellt wurde.

14

8.  Kompatible heterogene Polyamid-Polyethylen-Mischungen nach einem der vorstehenden Ansprüche, wobei das Pfropfmittel der Komponente (C) eine ungesättigte Mono- oder Polycarbonsäure oder ein Derivat davon ist, ausgewählt aus Anhydriden, Estern, Amiden, Imiden und Salzen.

9.  Kompatible heterogene Polyamid-Polyethylen-Mischungen nach Anspruch 8, wobei das Säurepfropfmittel der Komponente (C) Maleinsäure oder Maleinsäureanhydrid ist.

10. Verwendung einer kompatiblen heterogenen Polyamid-Polyethylen-Mischung nach einem der vorstehenden Ansprüche für Folien für Verpackungs-, Spritzguss- und Blasformartikel, extrudierte Folien, Agrarfolien, industrielle Einlagen, Profile, Rohre.

**Revendications**

1.  Mélanges de polyamide-polyéthylène hétérogènes compatibles comprenant

    (A) 30 à 98 % en poids d'une matrice comprenant un polyéthylène basse densité linéaire avec une densité (ISO 1183) de 900 à 940 kg/m$^3$ contenant au moins un comonomère d'a-oléfine en $C_3$-$C_{10}$ en plus d'éthylène, qui a été produite dans un procédé utilisant un catalyseur de Ziegler-Natta et comprenant

    (A-1) 25 à 55 % en poids d'une fraction à faible poids moléculaire étant un homopolymère d'éthylène ou un copolymère d'éthylène et d'au moins un comonomère d'a-oléfine en $C_3$-$C_{10}$, et
    (A-2) 45 à 75 % en poids d'une fraction à poids moléculaire élevé étant un copolymère d'éthylène et d'au moins un comonomère d'a-oléfine en $C_3$-$C_{10}$,

    de sorte que le polyéthylène basse densité linéaire présente une distribution bimodale de poids moléculaire,
    (B) 2 à 70 % en poids d'une composition de polyamide comprenant 20 à 100 % en poids d'un polyamide choisi parmi des polyamides aliphatiques, semi-aromatiques ou aromatiques à structure cristalline, semi-cristalline ou amorphe et 0 à 80% en poids d'au moins une polyoléfine, dispersée dans la matrice (A) et
    (C) 0 à 10% en poids d'un agent de compatibilité étant un polyéthylène greffé avec un composé d'acide mono ou polycarboxylique ou un dérivé de celui-ci en tant qu'agent de greffage, de sorte que la quantité dudit agent de greffage est comprise entre 0,01 et 3,0 parties en poids du composant (C).

2.  Mélanges de polyamide-polyéthylène hétérogènes compatibles selon la revendication 1, dans lesquels la matrice (A) peut être un polyéthylène basse densité linéaire bimodal vierge ou un polyéthylène basse densité linéaire bimodal recyclé ou un mélange de polyéthylènes basse densité linéaire bimodaux vierge et recyclé.

3.  Mélanges de polyamide-polyéthylène hétérogènes compatibles selon la revendication 1 ou 2, dans lesquels le polyéthylène basse densité linéaire de la matrice (A) a une distribution bimodale de teneur en comonomère.

4.  Mélanges de polyamide-polyéthylène hétérogènes compatibles selon l'une quelconque des revendications précédentes, dans lesquels le composant (B) peut comprendre

    - 100 % en poids de polyamide natif ou recyclé ou
    - un matériau recyclé étant un matériau multicomposant comprenant 20 % en poids à 60 % en poids de polyamide et au moins une polyoléfine en une quantité de 40 à 80 % en poids de composant (B).

5.  Mélanges de polyamide-polyéthylène hétérogènes compatibles selon la revendication 4, dans lesquels le matériau multicomposant provient d'un film multicouche utilisé dans la zone d'emballage, de sorte que de tels films sont composés de polyoléfines, de préférence de polyéthylènes, en tant que constituant principal et de polyamide, qui est utilisé en tant que couche barrière et couche de liaison facultative, et d'additifs habituels.

6.  Mélanges de polyamide-polyéthylène hétérogènes compatibles selon l'une quelconque des revendications précédentes, dans lesquels le polyéthylène du composant (C) peut comprendre des polymères d'éthylène linéaires choisis parmi un polyéthylène basse densité linéaire (LLDPE), un polyéthylène moyenne densité linéaire (LMDPE), un polyéthylène haute densité (HDPE), un polyéthylène très basse densité (VLDPE) produit dans des processus à basse pression et un polyéthylène produit dans un processus de polymérisation à haute pression par une polymérisation de radicaux libres (LDPE).

**7.** Mélanges de polyamide-polyéthylène hétérogènes compatibles selon la revendication 6, dans lesquels l'éthylène linéaire est un polyéthylène basse densité linéaire (LLDPE), qui a été produit en utilisant un catalyseur de métallocène.

**8.** Mélanges de polyamide-polyéthylène hétérogènes compatibles selon l'une quelconque des revendications précédentes, dans lesquels l'agent de greffage du composant (C) est un acide mono ou polycarboxylique insaturé ou un dérivé de celui-ci choisi parmi des anhydrides, des esters, des amides, des imides et des sels.

**9.** Mélanges de polyamide-polyéthylène hétérogènes compatibles selon la revendication 8, dans lesquels l'agent de greffage acide du composant (C) est un acide maléique ou un anhydride d'acide maléique.

**10.** Utilisation de mélanges de polyamide-polyéthylène hétérogènes compatibles selon l'une quelconque des revendications précédentes pour des films d'emballage, des articles moulés par injection et par soufflage, des feuilles extrudées, des films agricoles, des revêtements industriels, des profilés, des tuyaux.

**Figure 1: Differences/changes in Strain at break compared to matrix material**

| | Ref | Ex1/CE1 | Ex2/CE2 | Ex3/CE3 | Ex4/CE4 |
|---|---|---|---|---|---|
| A | 0 | 0 | -26,25 | -48,5 | -43,75 |
| A-U | 0 | -15,12 | -24,42 | -97,91 | -95,23 |

**Figure 2: Differences/changes in Impact strength compared to matrix material**

| | Ref | Ex1/CE1 | Ex2/CE2 | Ex3/CE3 | Ex4/CE4 |
|---|---|---|---|---|---|
| A | 0,00 | 7,87 | 5,08 | -33,44 | -14,43 |
| A-U | 0,00 | 9,09 | -35,83 | -72,19 | -56,52 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9535323 A
- WO 0155230 A
- WO 2004000933 A
- WO 2004000902 A
- EP 810235 A
- WO 9951646 A
- WO 03106510 A
- EP 0810235 A
- EP 688794 A
- EP 835887 A
- WO 2004106393 A

**Non-patent literature cited in the description**

- **K. K. MCAULEY ; J. F. MCGREGOR.** On-line Inference of Polymer Properties in an Industrial Polyethylene Reactor. *AIChE Journal,* June 1991, vol. 37 (6), 825-835